# EUROPÄISCHE PATENTSCHRIFT

(11) **EP 0 947 520 B1**
(45) Veröffentlichungstag und Bekanntmachung des Hinweises auf die Patenterteilung: **02.06.2004**
(21) Anmeldenummer: 99105532.8
(22) Anmeldetag: 18.03.1999
(51) Int. Cl.: C07F 5/00, C07F 7/18, C09D 183/14, C08L 83/14, C08K 3/00

(54) **Bor- und/oder aluminiumhaltige Mischungen, Hybridmaterialien und Beschichtungen**
Boron and/or aluminum comprising mixtures, hybrid materials and coatings
Mélanges contenant du bore et/ou de l'aluminium, matériaux hybrides et revêtements

(30) Priorität: 30.03.1998 DE 19814060
(43) Veröffentlichungstag der Anmeldung: 06.10.1999
(73) Patentinhaber: Bayer MaterialScience AG, 51368 Leverkusen (DE)
(72) Erfinder: Mager, Michael, Dr., 51375 Leverkusen (DE); Hofacker, Steffen, Dr., 53879 Euskirchen (DE)

(56) Entgegenhaltungen:
- EP-A2- 0 743 313
- WO-A1-94/06807
- WO-A1-98/38251
- DE-A1- 19 650 147

## Beschreibung

Die vorliegende Erfindung betrifft bor- und/oder aluminiumhaltige, siliciumhaltige Mischungen, daraus hergestellte Hybridmaterialien und Beschichtungen.

In DE-A 1 96 03 242, DE-A 1 96 03 241 und WO 94/06807 sind zahlreiche Organosilane beschrieben, aus welchen über einen Sol-Gel-Prozeß anorganisch-organische Hybridmaterialien herstellbar sind. Diese Materialien können z.B. zur Beschichtung von Oberflächen eingesetzt werden. Die raumtemperaturhärtbaren Beschichtungen zeichnen sich z.B. durch hohe Transparenz, gute Lösemittelfestigkeit und gute mechanische Verschleißfestigkeit bei gleichzeitiger Elastizität aus. Nachteiligerweise eignen sich die dabei beschriebenen Mischungen nicht zur Beschichtung von transparenten Substraten, z.B. aus Kunststoff oder auch Glas, wenn diese extremen mechanischen Belastungen ausgesetzt sind. Hierfür sind die Anforderungen an die Verschleißfestigkeit naturgemäß besonders hoch, da schon geringste Beschädigungen zumindest den optischen Eindruck verschlechtern. Es war daher wünschenswert, die Oberflächenhärte von Sol-Gel-Beschichtungen, insbesondere auf Basis der obengenannten polyfunktionellen Organosilane, zu verbessern, um sie bei der Beschichtung von vorzugsweise transparenten Substraten einsetzen zu können.

In WO 98/25274 werden Mischungen beschrieben, welche Zubereitungen von Polythiophenen und Reaktionsprodukte von polyfunktionellen Organosilanen enthalten. Diese können zusätzlich Reaktionsprodukte von Alkoxiden der Elemente B, Al, Si, Sn, Ti und Zr, Metalloxide oder Metalloxidhydroxide der Elemente B, Al, Si, Sn, Ti und Zr, sowie Lösungsmittel enthalten. Die Mischung können zur Herstellung leitfähiger Beschichtungen eingesetzt werden.

WO 98/38251 offenbart organisch-anorganische Hybridmaterialien enthaltend organische Polymere, anorganische Partikel, anorganisch-organische Bindemittel und Lösungsmittel. Die Mischungen können zusätzlich Metall- und Nichtmetallalkoxide enthalten. Die Mischungen können zur Herstellung abriebfester Beschichtungen verwendet werden.

In EP 0 743 313 werden neue Carbosilan-Dendrimere mit Silanol-Endgruppen beschrieben, welche in Gegenwart eines Katalysators in einem Lösungsmittel mit Alkoxiden der Formel M(OR')ₓ zu organisch-anorganischen Hybridmaterialien umgesetzt werden können, welche ebenfalls zur Herstellung von Beschichtungen eingesetzt werden können. Die genannten Alkoxide sind solche mit M=Si, G, Sn, B, Al, Ga, In, Ti, Zr, Hf, Nb und Ta.

In WO 94/06807 werden anorganisch-organische Zusammensetzungen offenbart, welche aus Alkoxid-funktionellen Carbosilan-Dendrimeren bestehen. Die können unter den üblichen Bedingungen der Sol-Gel-Technologie mit Alkoxiden wie Tetraalkoxysilanen (z.B. Si(OC₂H₅)₄) umgesetzt werden. Die Zusammensetzungen eignen sich zur Herstellung Formkörpern und Beschichtungen.

Aufgabe der vorliegenden Erfindung war daher die Bereitstellung von Mischungen auf Basis monomerer polyfunktioneller Organosilane, aus welchen Beschichtungen herstellbar sind, deren mechanische Verschleißfestigkeit gegenüber den bekannten Systemen deutlich verbessert ist und die z.B. zur Beschichtung von transparenten Substraten geeignet sind.

Überraschend wurde nun gefunden, daß die Aufgabe mit den erfindungsgemäßen Mischungen aus monomeren polyfunktionellen Organosilanen und bestimmten borund/oder aluminiumhaltige Verbindungen gelöst werden kann.

Gegenstand der vorliegenden Erfindung sind daher Mischungen enthaltend
A) mindestens ein lineares, verzweigtes oder cyclisches monomeres Organosilan, das über mindestens 2 Siliciumatome mit hydrolysierbaren und/oder kondensationsvernetzenden Gruppen verfügt, wobei die Siliciumatome jeweils über mindestens 1 Kohlenstoffatom über eine verknüpfende Einheit miteinander verbunden sind und
B) mindestens eine bor- und/oder aluminiumhaltige Verbindung der Formel (I)

   RₓM(OR')₃₋ₓ (I),

   wobei
   - x =: 0, 1 oder 2 ist,
   - R =: C₁-C₆-Alkyl, C₆-C₁₂-Aryl oder (O)_{1/2} ist und im Falle von R = (O)_{1/2} und
   x = 1 die Verbindung der Formel (I) Bestandteil einer Kette ist und im Falle von
   x = 2 Bestandteil einer ringförmigen oder käfigförmigen Verbindung ist und
   - R' =: H, C₁-C₁₀-Alkyl und/oder C₆-C₁₂-Aryl ist und
   - M =: Al, B.
C) Alkoxide der Formel (VIa)

   Q(OR")_{z} (IVa)

   mit
   - Q =: Ga oder In
   - z =: 3 und
   - R" =: ein gegebenenfalls ein- oder mehrfach substituierter C₁-C₆-Alkyloder C₆-C₁₂-Arylrest ist,
   oder worin
   - Q =: Si, Ge, Ti, Zr oder Hf und
   - z =: 4 ist
   und/oder

   (R')_{4-y}Si(OR")_{y} (IVb)

   mit
   - R': ein Alkyl- oder Arylrest ist, der ein- oder mehrfach substituiert sein kann,
   - y: gleich 1, 2 oder 3 ist und
   - R" =: ein gegebenenfalls ein- oder mehrfach substituiertes C₁-C₆-Alkyloder C₆-C₁₂-Arylrest ist.

Bevorzugt enthalten die Organosilane (A) mindestens 3, besonders bevorzugt mindestens 4 Siliciumatome mit hydrolysierbaren und/oder kondensationsvernetzenden Gruppen.

Als hydrolysierbare Gruppen sind C₁-C₁₀-Alkoxy- oder C₆-C₁₂-Aryloxygruppen, bevorzugt, insbesondere Alkyloxygruppen wie Methyloxy-, Ethyloxy-, Propyloxyoder Butyloxy. Kondensationsvernetzende Gruppen sind vorzugsweise Silanolgruppen (SiOH).

Verknüpfende Einheiten im Sinne der Erfindung sind sowohl einzelne Atome als auch Moleküle. Molekulare Einheiten sind vorzugsweise lineare oder verzweigte C₁-C₂₀-Alkylenketten, C₅-C₁₀-Cycloalkylenreste oder C₆-C₁₂-aromatische Reste, wie z.B. Phenyl-, Naphthyl- oder Biphenylreste sowie heterocyclische, heteroaromatische oder mit Heteroatomen substituierte lineare Verbindungen. Die genannten Reste können ein- oder mehrfach substituiert sein. Als atomare Einheiten sind Si, N, P, O oder S bevorzugt.

Als verknüpfende Einheiten seien insbesondere cyclische und käfigförmige Siloxane, sowie verzweigte Carbosilane genannt, wobei als monomere Organosilane (A) folgende Verbindungen bevorzugt sind:

R¹ ₄₋ᵢSi[(CH₂)ₙSi(OR²)ₐR³ ₃₋ₐ]ᵢ (II)

mit
i = 2 bis 4, bevorzugt i = 4,
n = 1 bis 10, bevorzugt n = 2 bis 4, besonders bevorzugt n = 2 und
R¹ = C₁-C₆-Alkyl, C₆-C₁₄-Aryl,
a = 1 bis 3
R² = C₁-C₆-Alkyl, C₆-C₁₄-Aryl, bevorzugt R² = Methyl, Ethyl, Isopropyl,
R³ = C₁-C₆-Alkyl, C₆-C₁₄-Aryl, bevorzugt R³ = Methyl, wobei für den Fall a = 1 R² auch Wasserstoff bedeuten kann.

Weitere Beispiele sind cyclische Verbindungen der allgemeinen Formel (III) 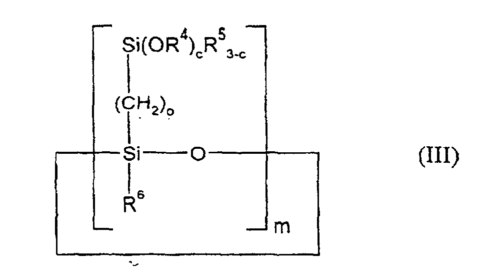 mit
m = 3 bis 6, bevorzugt m = 3 oder 4,
o = 2 bis 10, bevorzugt o = 2,
c = 1 bis 3,
R⁴ = C₁-C₆-Alkyl, C₆-C₁₄-Aryl, bevorzugt R⁴ = Methyl, Ethyl, Isopropyl;
für den Fall c = 1 kann R⁴ auch Wasserstoff bedeuten,
R⁵ = C₁-C₆-Alkyl, C₆-C₁₄-Aryl, bevorzugt R⁵ = Methyl,
R⁶ = C₁-C₆ Alkyl oder C₆-C₁₄-Aryl,
bevorzugt R⁶ = Methyl, Ethyl, besonders bevorzugt R⁶ = Methyl,
und/oder der allgemeinen Formel (IV)

R¹⁰ ₄₋ᵢSi[OSiR⁹ ₂(CH₂)ₚSi(OR⁷)_{d}R⁸ _{3-d}]ᵢ (IV)

mit
i = 2 bis 4, bevorzugt i = 4,
R¹⁰ = C₁-C₆-Alkyl, C₆-C₁₄-Aryl,
p = 1 bis 10, bevorzugt p = 2 bis 4, besonders bevorzugt p = 2,
R⁸= C₁-C₆-Alkyl, C₆-C₁₄-Aryl, bevorzugt R⁸= Methyl,
d = 1 bis 3,
R⁷ = C₁-C₆-Alkyl, C₆-C₁₄-Aryl, bevorzugt R⁷ = Methyl, Ethyl, Isopropyl;
für den Fall d = 1 kann R⁷ auch H sein und
R⁹= C₁-C₆-Alkyl, C₆-C₁₄-Aryl, bevorzugt R⁹ = Methyl.

Im Einzelnen sind als monomere Organosilane Silanole bzw. Alkoxide, z.B.:

Si[(CH₂)₂Si(OH)(CH₃)₂]₄

*cyclo*-{OSiMe[(CH₂)₂Si(OH)Me₂]}₄,

*cyclo*-{OSiMe[(CH₂)₂Si(OEt)₂Me]}₄

*cyclo*-{OSiMe[(CH₂)₂Si(OMe)Me₂]}₄

und/oder

*cyclo*-{OSiMe[(CH₂)₂Si(OEt)₃]}₄,

bevorzugt.

Als bor- und/oder aluminiumhaltige Verbindungen sind solche der allgemeinen Formel (V) bevorzugt

Rₓ M(OR')₃₋ₓ (V)

worin
- M =: Al, B
- x =: 0 oder 1
- R=: C₁-C₆-Alkyl oder C₆-C₁₂-Alkyl ist und
- R' =: H, C₁-C₆-Alkyl und/oder C₆-C₁₂-Aryl bedeuten.

Als borhaltige Verbindungen sind solche besonders bevorzugt, in denen R' ein C₁-C₅-Alkylrest, ganz besonders bevorzugt ein Methyl- oder Ethylrest ist.

Als aluminiumhaltige Verbindungen sind solche besonders bevorzugt, in denen R' ein C₁-C₅-Alkylrest, ganz besonders bevorzugt ein Isopropyl- oder 2-Butylrest ist.

Im Einzelnen seien als borhaltige Verbindungen genannt:

B(OMe)₃,

B(OEt)₃,

B(OH)₃,

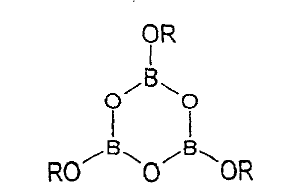

mit R = Me, Et,

(RO)₂ B-O-B (OR)₂

mit R = Me, Et,
und/oder

C₆H₅-B(OH)₂

Im Einzelnen seien als aluminiumhaltige Verbindungen genannt:

Al(OⁱPr)₃

Al(O^{s}Bu)₃

Ferner sind aluminiumhaltige Verbindungen der allgemeinen Formel (Va, Vb) bevorzugt 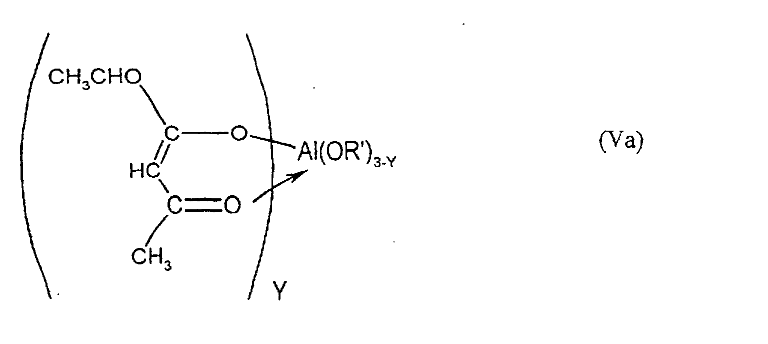 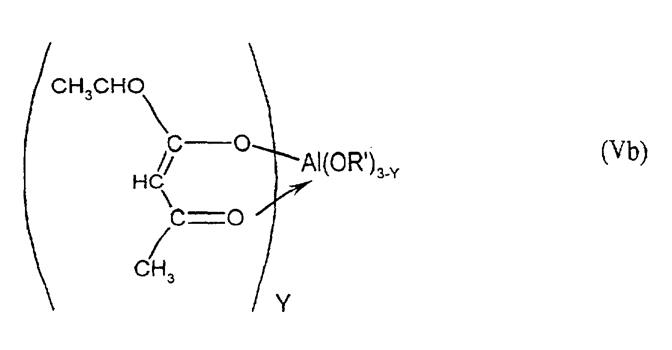 worin
- Y =: 0, 1 oder 2
- R' =: H, C₁-C₆-Alkyl und/oder C₆-C₁₂-Aryl bedeutet.

Als aluminiumhaltige Verbindungen der Formeln (Va) und (Vb) sind solche besonders bevorzugt, in denen R' ein C₁-C₅-Alkylrest, ganz besonders bevorzugt ein Isopropyl- oder 2-Butylrest ist.

In einer weiteren bevorzugten Ausführungsform der Erfindung enthalten die Mischungen zusätzlich Alkoxide (C) der Formel

Q(OR")_{z} (VIa),

worin
- Q: Ga oder In bedeutet und
- z: gleich 3 ist und
- R": ein gegebenenfalls ein- oder mehrfach substituierter C₁-C₆-Alkyl- oder C₆-C₁₂-Arylrest ist,
und/oder worin
- Q: Si, Ge, Ti, Zr oder Hf bedeutet und
- z: gleich 4 ist und
- R": die oben angegebene Bedeutung hat,
und/oder Verbindungen der Formel

(R')_{4-y}Si(OR")_{y} (VIb)

worin
- R': ein C₁-C₆-Alkyl- oder C₆-C₁₄-Arylrest ist, der ein- oder mehrfach substituiert sein kann,
- y: gleich 1, 2 oder 3 ist und
- R": die gleiche Bedeutung wie in Formel (VIa) hat.

Besonders bevorzugt sind Alkoxide der nachfolgenden Formeln:

Si(OCH₃)₄

Si(OC₂H₅)₄

CH₃-Si(OCH₃)₃

CH₃-Si(OC₂H₅)₃

C₆H₅-Si(OCH₃)₃

C₆H₅-Si(OC₂H₅)₃.

Die Alkoxide erhöhen die Verschleißfestigkeit.

Zur weiteren Erhöhung der Verschleißfestigkeit können die erfindungsgemäßen Mischungen auch anorganische Partikel (D) enthalten.

Als anorganische Partikel (D) werden insbesondere solche eingesetzt, deren Teilchengröße so gering ist, daß optisch transparente Hybridmaterialien aus den erfindungsgemäßen Mischungen erhalten werden. Solche Partikel sind z.B. Oxide, Oxidhydrate und/oder Hydroxide der Elemente B, Al, Si, Ti, Zr, Ce, wie B₂O₃, Al₂O₃, SiO₂, TiO₂, CeO₂. Zur mechanischen Verstärkung eignen sich bevorzugt Kieselsole als wäßrige oder organische Dispersion.

Die mittlere Teilchengröße beträgt vorzugsweise 1 bis 100 nm, bevorzugt 5 bis 50 nm, bestimmt mittels Ultrazentrifugation.

In einer weiteren bevorzugten Ausführungsform der Erfindung enthalten die Mischungen zusätzlich ein Lösemittel (E).

Geeignete Lösemittel (E) sind z.B. mono- und polyfunktionelle Alkohole, wie z.B. Methanol, Ethanol, n-Propanol, Isopropanol, n-Butanol, sec-Butanol, 1-Methoxy-2-propanol und Ethylenglykol, Ketone, wie z.B. Aceton, Methylethylketon und Methylisobutylketon und Ester, wie z.B. n-Butylacetat. Es können durchaus aber auch Mischungen von verschiedenen Lösemitteln eingesetzt werden.

Bei einer entsprechenden Abstimmung der verwendeten Lösemittel (E) ist es auch möglich, den erfindungsgemäßen Mischungen zusätzlich organische Polymere zuzusetzen. Dies kann z.B. zur Verbesserung der Elastizität der aus den Mischungen hergestellten Beschichtungen dienen. Aber auch die Haftung einer Beschichtung, insbesondere auf Kunststoffen, kann durch Zusatz von organischen Polymeren verbessert werden.

Als organische Polymere seien bevorzugt solche auf Basis von Poly(meth)acrylaten, Polyestern, Polyamiden, Polyketonen oder Polycarbamaten genannt.

Den erfindungsgemäßen Mischungen können selbstverständlich auch lösliche Farbstoffe oder organische und anorganische Pigmente zur Einfärbung oder als Korrosionsschutzmittel, sowie sonstige Lackhilfsmittel, wie z.B. Verlaufshilfsmittel, zugesetzt werden.

Die erfindungsgemäßen Mischungen weisen vorzugsweise folgende Zusammensetzung auf:

| | |
|---|---|
| 1 bis 80 Gew.-% | mindestens eines monomeren Organosilans (A), |
| 0,1 bis 20 Gew.-% | mindestens einer bor- und/oder aluminiumhaltigen Verbindung (B), |
| 0 bis 50 Gew.-% | Alkoxide (C), |
| 0 bis 80 Gew.-% | anorganische Partikel (D), |
| 0 bis 50 Gew.-% | Lösemittel (E), |

wobei die Summe aller vorhandenen Komponenten 100 Gew.-% ergibt.

Für aluminiumhaltige Mischungen besonders bevorzugt sind Mischungen mit folgender Zusammensetzung:

| | |
|---|---|
| 5 bis 15 Gew.-% | mindestens eines monomeren Organosilans (A), |
| 8 bis 16 Gew.-% | mindestens einer aluminiumhaltigen Verbindung (B), |
| 25 bis 40 Gew.-% | Alkoxide (C), |
| 20 bis 45 Gew.-% | Lösemittel (E), |

wobei die Summe aller vorhandenen Komponenten 100 Gew.-% ergibt.

Für aluminiumhaltige Mischungen ganz besonders bevorzugt sind Mischungen mit folgender Zusammensetzung:

| | |
|---|---|
| 8 bis 11 Gew.-% | mindestens eines monomeren Organosilans (A), |
| 10 bis 14 Gew.-% | mindestens einer aluminiumhaltigen Verbindung (B), |
| 30 bis 40 Gew.-% | Alkoxide (C), |
| 35 bis 45 Gew.-% | Lösemittel (E), |

wobei die Summe aller vorhandenen Komponenten 100 Gew.-% ergibt.

Die erfindungsgemäßen Mischungen werden vorzugsweise so hergestellt, daß die Komponenten in beliebiger Reihenfolge, gegebenenfalls unter Rühren, vermischt werden.

Ein weiterer Gegenstand der Erfindung sind Hybridmaterialien, erhältlich durch die Umsetzung der erfindungsgemäßen Mischung in Gegenwart von Wasser und gegebenenfalls Katalysatoren.

Als Beispiele für Katalysatoren seien z.B. genannt: organische und anorganische Säuren und Basen, wie Ameisensäure, p-Toluolsulfonsäure, Salzsäure bzw. Natriumund Kaliumhydroxid, metallorganische Katalysatoren, wie z.B. Dibutylzinnlaureat und katalytisch wirksame Alkoxide, wie z.B. Ti- und Al-Alkoxide.

Die Menge an Wasser beträgt vorzugsweise mindestens soviel, daß alle hydrolysierbaren Gruppen der Mischung abreagieren können. Besonders bevorzugt liegt das molare Verhältnis der hydrolysierbaren Gruppe zu Wasser zwischen 1:1 1 und 1:2.

Die Katalysatoren werden vorzugsweise in einer Menge von kleiner 1 Gew.-%, bezogen auf alle Bestandteile der Mischung eingesetzt.

In einer Ausführungsform der vorliegenden Erfindung zur Herstellung borhaltiger Mischungen wird die borhaltige Verbindung (B) zunächst mit der Dispersion der anorganischen Partikel (D), z.B. SiO₂ in organischem Lösemittel (Organokieselsol), vermischt. Dabei kann es gegebenenfalls zur Kondensation von (B) mit den SiO₂-Partikeln kommen. Zu diesem modifizierten Kieselsol werden dann die anderen Komponenten, d.h. monomeres Organosilan (A) und gegebenenfalls Lösemittel (E), Alkoxid (D), Wasser und Katalysator gegeben.

In einer weiteren Ausführungsform wird zunächst die Aluminiumverbindung (B) im Lösemittel gelöst und mit einem Komplexbildner z.B. Acetessigester bei Raumtemperatur komplexiert. Parallel dazu wird das Alkoxid (C) im Lösemittel (E) gelöst und mit Katalysator, wie 0,1 N p-Toluolsulfonsäure, versetzt und eine Stunde bei Raumtemperatur gerührt (Vorhydrolysat). Im Anschluß daran wird das Vorhydrolysat mit der komplexierten Aluminiumlösung vermischt und zu dieser Lösung gegebenenfalls weiterer Katalysator, wie 0,1 N p-Toluolsulfonsäure, zugegeben und die Lösung eine Stunde gerührt. Schließlich wird monomeres Organosilan (A) mit Lösemittel (E) zugesetzt und das Reaktionsgemisch eine weitere Stunde bei Raumtemperatur gerührt. Danach ist der Lack gebrauchsfertig und kann appliziert werden.

Ferner ist es in einer weiteren Ausführungsform der vorliegenden Erfindung zur Herstellung aluminiumhaltiger Mischungen möglich, zunächst die Aluminiumverbindung (B) im Lösemittel (E) zu lösen und mit einem Komplexbildner, z.B. Acetessigester bei Raumtemperatur zu komplexieren, diese dann auf 40 bis 80°C zu erwärmen und schließlich monomeres Organosilan (A) in Molverhältnissen 1:16 bis 1:4,5 (monomeres Organosilan:Aluminiumverbindung) unter ständigem Rühren zuzugeben (Aluminium/Organosilan-Precursor). Parallel dazu wird das Alkoxid (C) im Lösemittel gelöst und mit Katalysator, wie 0,1 N p-Toluolsulfonsäure, versetzt und eine Stunde bei Raumtemperatur gerührt (Vorhydrolysat). Im Anschluß daran wird das Vorhydrolysat mit dem Aluminium/Organosilan-Precursor vermischt und zu dieser Lösung gegebenenfalls weiterer Katalysator, wie 0,1 N p-Toluolsulfonsäure zugegeben und die Lösung eine Stunde gerührt. Danach ist der Lack gebrauchsfertig und kann appliziert werden.

Die flüchtigen Bestandteile können anschließend bei Temperaturen zwischen -30°C und 220°C abgedampft werden.

Ein weiterer Gegenstand der Erfindung sind Beschichtungen, erhältlich durch Aufbringen der erfindungsgemäßen Mischungen oder Hybridmaterialien auf eine Oberfläche und Verdampfen der flüchtigen Verbindungen.

Dies kann beispielsweise bei Temperaturen von -30°C bis +220°C, vorzugsweise bei Normaldruck, erfolgen. Falls nötig, kann die erhaltene Beschichtung bei den angegebenen Temperaturen nachgehärtet werden.

Die erfindungsgemäßen Mischungen eignen sich insbesondere zur Herstellung von Hybridmaterialien bzw. Beschichtungen hoher Transparenz, excellenter Lösemittelund Chemikalienbeständigkeit, thermischer Beständigkeit und mechanischer Verschleißfestigkeit. Hervorzuheben ist auch die Tatsache, daß viele der genannten Mischungen bei Raumtemperatur zu verschleißfesten Beschichtungen ausgehärtet werden können.

Aufgrund des obengenannten Eigenschaftsprofils eignen sich die erfindungsgemäßen Mischungen vor allem zur Beschichtung von Kunststoffen zwecks Verbesserung der mechanischen Verschleißfähigkeit der Oberfläche. Insbesondere die Oberfläche transparenter Kunststoffe, wie z.B. von Polycarbonaten und Poly(meth)acrylaten, kann mit den neuen Beschichtungen gegen mechanischen Verschleiß gut geschützt werden. Es ist Stand der Technik, daß die Haftung von Kratzfestbeschichtungen auf Kunststoffen mittels Vorbeschichtung (Primerung) oder physikalischer Behandlung (Plasma- oder Koronabehandlung) erheblich verbessert werden kann. Dies ist auch hier möglich.

In gleicher Weise können aber auch vorlackierte metallische Untergründe z.B. gegen mechanische Beanspruchung und den Einfluß von Chemikalien geschützt werden. Eine transparente Decklackierung mit den erfindungsgemäßen Mischungen bzw. Hybridmaterialien schützt organische Beschichtungen, z.B. auf Basis von Polyurethanen oder Epoxiden, effektiv vor dem Eindringen von Farbe und ist daher als Anti-Graffiti-Beschichtung einsetzbar. Ein solcher Schutz ist aber auch für keramische und mineralische Untergründe (z.B. Naturstein) erreichbar.

Auch metallische Oberflächen, z.B. aus Eisen, Stahl, Kupfer, Aluminium, Bronze oder Messing, können mit den erfindungsgemäßen Beschichtungen z.B. gegen mechanischen Verschleiß geschützt werden. Insbesondere bei Stahl ist dies dann von Bedeutung, wenn die Oberfläche eine bestimmte Struktur aufweist (gebürstetes Stahl).

Entsprechend beschichtetes Glas kann z.B. vor Umwelteinflüssen, wie z.B. saurem Regen, geschützt werden.

Die erfindungsgemäßen Mischungen können durch ihre abtötende Wirkung auf (Mikro)Organismen insbesondere dort verwendet werden, wo ein Aufwachsen oder Anhaften von Organismen vermieden werden soll. Die ist insbesondere bei Naturstoffen, wie z.B. Holz, von Bedeutung. Eine Anwendung als Anti-Fouling-Beschichtung kommt ebenfalls in Frage.

### Ausführungsbeispiele

### Vorbemerkungen

Cyclo-{SiO(CH₃)[(CH₂)₂Si(OH)(CH₃)₂]}₄ (nachfolgend: D4-Silanol) und cyclo-{SiO(CH₃)[(CH₂)₂Si(OEt)₂(CH₃)]}₄ (nachfolgend: D4-Diethoxid) wurden, wie in DE-A 1 96 03 241 und DE-A 1 97 11 650 beschrieben, hergestellt. Das eingesetzte Organokieselsol war eine Dispersion von 30,4 Gew.-% SiO₂ (Primärteilchendurchmesser ca. 9 nm, mittlerer Teilchendurchmesser d₅₀ < 20 nm) in Isopropanol mit einem Restwassergehalt < 1 Gew.-%. Alle anderen (käuflichen) Einsatzstoffe wurden ohne weitere Reinigung eingesetzt.

Die Applikation der Beschichtungen erfolgte mittels eines Filmziehrahmens unterschiedlicher Spaltbreite (30, 60, 90, 120 und 240 µm) auf Glas- oder Polycarbonat (Makrolon®, Bayer AG, Leverkusen), oder aber durch Schleuderbeschichtung mit unterschiedlichen Umdrehungszahlen (300-2000 U/min) und für verschiedene Schleuderdauern (5-30 s). Nach Abdampfen der flüchtigen Bestandteile bei Raumtemperatur wurden die Beschichtungen in einem Umluftschrank ausgehärtet.

Die Ermittlung der Pendelhärte erfolgte nach DIN 53 157 (angegeben ist der Mittelwert aus 3 Messungen).

Zur Bestimmung der Abriebbeständigkeit mit Hilfe der Taber-Abraser-Methode nach ISO 3537 (500 g pro Rad, CS10F-Steine) durchgeführt. Nach 1000 Zyklen wurde die optische Trübungszunahme (Δ T) als Maß für die Abriebbeständigkeit gemäß ASTM D 1003 bestimmt.

Ferner wurde zur Ermittlung der Verschleißbeständigkeit wurde der sogenannte Hub-Schub-Test (20 Hübe) durchgeführt und die Zunahme der optischen Trübung (Δ Trübung) bestimmt. Die Durchführung des Tests und die Bestimmung der Trübung erfolgten nach folgender Art und Weise:

Beschreibung des Verkratzungsverfahrens:
Eine zu verkratzende Scheibe von 100 x 100 mm wurde in eine gleich große und eine genau gleich dicke Aussparung des Bodens einer Kunststoffschale gelegt. Die Kunststoffschale war auf einem Wagen befestigt, der mittels eines Motors hin- und hergehende Bewegungen von 100 mm Hublänge und einer Hubfrequenz von 150 Hübe/min ausführt. Auf die eingelegte Scheibe wurde das Verkratzungsmedium geschüttet und die Scheibe mit einer am Hubzähler vorgewählten Hubzahl verkratzt. Das Verkratzungsmedium blieb bei der Hubgeschwindigkeit infolge seiner Trägheit nahzu in Ruhe, d.h. die Relativbewegung zwischen Verkratzungsmedium und Scheibe war groß.

Die geeignete Einsatzmenge des Verkratzungsmediums für die benutzte Schalengröße war 1 kg.

Als Verkratzungsmedium wurde gebrochener Quarzsand mit einer Fraktion von 1,5 bis 2,5 mm Korngröße verwendet.

Messung des Verkratzungsgrades der Proben:
Bei diesen transparenten Proben wurde der Verkratzungsgrad durch Messung der Trübungszunahme in Abhängigkeit von der Hubzahl bestimmt.

Eine allgemeine Beschreibung des Test-Verfahrens befindet sich in Farbe und Lack 1972, 78(8), 712-723.

### Beispiele

### Beispiel 1: Herstellung bormodifizierter Organosole

50 g Organokieselsol und die in Tabelle 1 angegebene Art und Menge der borhaltigen Verbindung wurden unter Rühren zusammengegeben und weitere 20 Stunden gerührt. Die Trübung der erhaltenen Produkte war minimal höher als die des eingesetzten Organosols.

**Tabelle 1**

| Proben-Nr. | borhaltige Verbindung | Menge [g] |
|---|---|---|
| 1a | B(OEt)₃ | 1,5 |
| 1b | B(OEt)₃ | 5,0 |
| 1c | B(OMe)₃ | 1,5 |
| 1d | B(OMe)₃ | 5,0 |
| 1e | Trimethoxyboroxin | 5,0 |
| 1f | Phenylboronsäure | 0,5 |

### Beispiel 2: Beschichtungen mit dem bormodifizierten Organosol 1a und D4-Silanol

Die Komponenten wurden in der Menge und Reihenfolge, wie in Tabelle 2 angegeben, unter Rühren vermischt und weitere 60 Minuten gerührt. Danach wurden 2 Filme (30 und 60 µm Naßfilmdicke) auf Glas appliziert, die 30 Minuten bei Raumtemperatur und 3 Stunden bei 130°C ausgehärtet wurden. Es wurden rißfreie, transparente Beschichtungen erhalten.

**Tabelle 2**

| | Probe 2a | Probe 2b | Probe 2c | Probe 2d |
|---|---|---|---|---|
| Komponente | Menge [g] | Menge [g] | Menge [g] | Menge [g] |
| D4-Silanol | 0,9 | 0,8 | 0,6 | 0,5 |
| TEOS | 1,6 | 1,6 | 1,6 | 1,6 |
| mod. Organosol 1a | 5,0 | 5,0 | 5,0 | 5,0 |
| Isopropanol | 3,9 | 3,9 | 3,9 | 3,9 |
| 0,1 N p-Toluolsulfonsäure | 0,3 | 0,3 | 0,3 | 0,3 |

### Beispiel 3: Beschichtungen mit dem bormodifizierten Organosol 1b und D4-Silanol

Die Komponenten wurden in der Menge und Reihenfolge, wie in Tabelle 3 angegeben, unter Rühren vermischt und weitere 60 Minuten gerührt. Danach wurden 2 Filme (30 und 60 µm Naßfilmdicke) auf Glas appliziert, die 30 Minuten bei Raumtemperatur und 3 Stunden bei 130°C ausgehärtet wurden. Es wurden rißfreie, transparente Beschichtungen erhalten.

**Tabelle 3**

| | Probe 3a | Probe 3b | Probe 3c | Probe 3d |
|---|---|---|---|---|
| Komponente | Menge [g] | Menge [g] | Menge [g] | Menge [g] |
| D4-Silanol | 0,9 | 0,8 | 0,6 | 0,5 |
| TEOS | 1,6 | 1,6 | 1,6 | 1,6 |
| mod. Organosol 1b | 5,0 | 5,0 | 5,0 | 5,0 |
| Isopropanol | 3,9 | 3,9 | 3,9 | 3,9 |
| 0,1 N p-Toluolsulfonsäure | 0,3 | 0,3 | 0,3 | 0,3 |

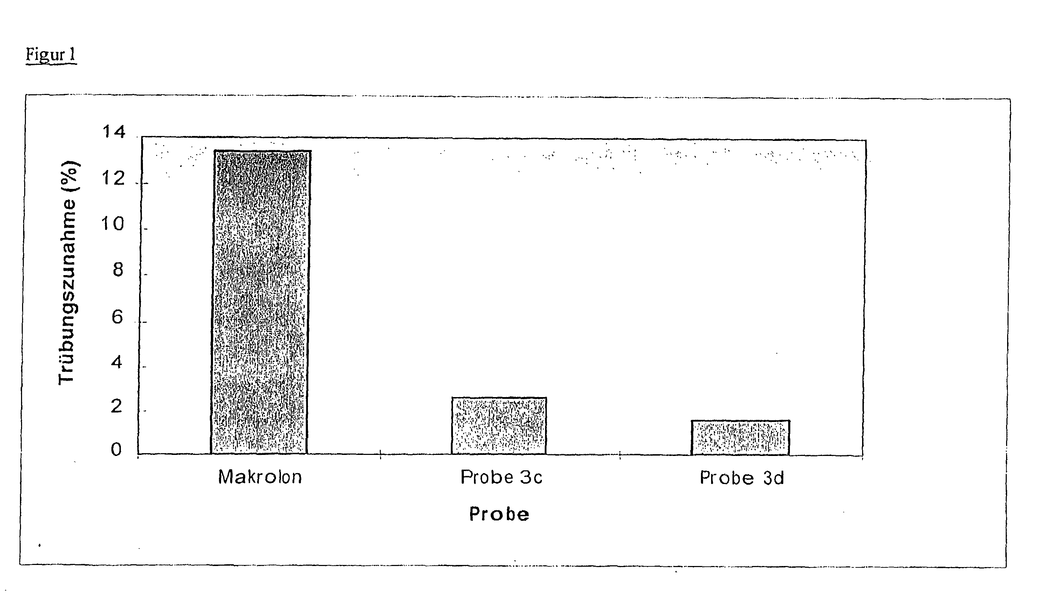

Die Ergebnisse des Hub-Schub-Tests sind in der nachfolgenden Tabelle aufgeführt und in Figur 1 grafisch dargestellt. Dort ist als Vergleich ebenfalls der Wert für unbeschichtetes Polycarbonat (Makrolon ®, Bayer AG, D-51368 Leverkusen, Deutschland) angegeben

| Proben-Nr. | Δ Trübung [%] |
|---|---|
| Makrolon® | 13,40 |
| 3c | 2,60 |
| 3d | 1,59 |

### Beispiel 4: Beschichtungen mit dem bormodifizierten Organosol 1a und D4-Diethoxid

Die Komponenten wurden in der Menge und Reihenfolge, wie in Tabelle 4 angegeben, unter Rühren vermischt und weitere 60 Minuten gerührt. Danach wurden 2 Filme (30 und 60 µm Naßfilmdicke) auf Glas appliziert, die 30 Minuten bei Raumtemperatur und 3 Stunden bei 130 °C ausgehärtet wurden. Es wurden rißfreie, transparente Beschichtungen erhalten.

**Tabelle 4**

| | Probe 4a | Probe 4b | Probe 4c |
|---|---|---|---|
| Komponente | Menge [g] | Menge [g] | Menge [g] |
| D4-Diethoxid | 0,9 | 0,8 | 0,6 |
| TEOS | 1,6 | 1,6 | 1,6 |
| mod. Organosol 1a | 5,0 | 5,0 | 5,0 |
| Isopropanol | 3,9 | 3,9 | 3,9 |
| 0,1 N p-Toluolsulfonsäure | 0,4 | 0,4 | 0,4 |

### Beispiel 5: Beschichtungen mit dem bormodifizierten Organosol 1b und D4-Diethoxid

Die Komponenten wurden in der Menge und Reihenfolge, wie in Tabelle 5 angegeben, unter Rühren vermischt und weitere 60 Minuten gerührt. Danach wurden 2 Filme (30 und 60 µm Naßfilmdicke) auf Glas appliziert, die 30 Minuten bei Raumtemperatur und 3 Stunden bei 130°C ausgehärtet wurden. Es wurden rißfreie, transparente Beschichtungen erhalten.

**Tabelle 5**

| | Probe 5a | Probe 5b |
|---|---|---|
| Komponente | Menge [g] | Menge [g] |
| D4-Diethoxid | 0,9 | 0,8 |
| TEOS | 1,6 | 1,6 |
| mod. Organosol 1b | 5,0 | 5,0 |
| Isopropanol | 3,9 | 3,9 |
| 0,1 N p-Toluolsulfonsäure | 0,4 | 0,4 |

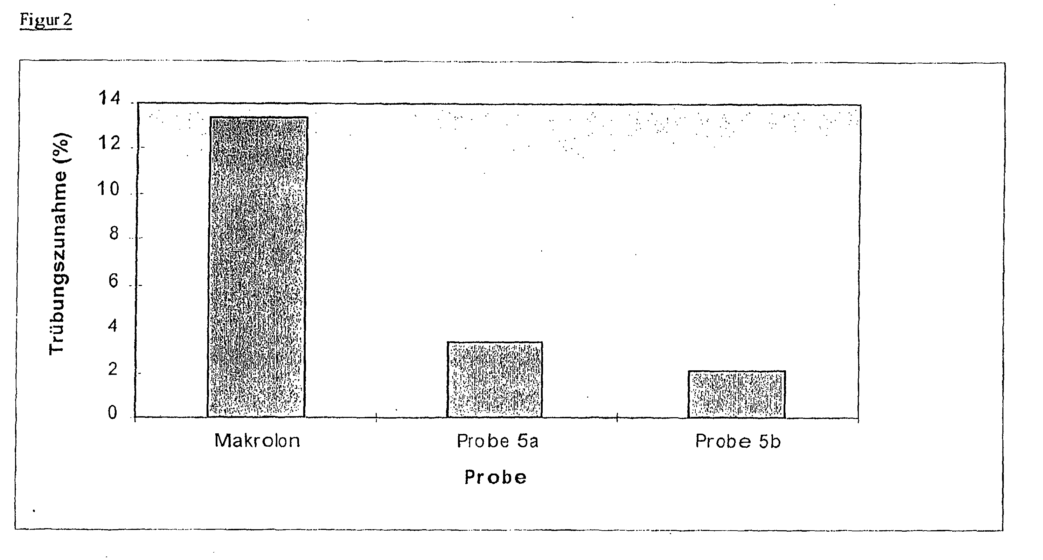

Die Ergebnisse des Hub-Schub-Tests sind in Tabelle 5a, auch im Vergleich zu unbeschichtetem Makrolon®, wiedergegeben und in Figur 2 dargestellt.

**Tabelle 5a**

| Proben-Nr. | Δ Trübung [%] |
|---|---|
| Makrolon® | 13,40 |
| 5a | 3,44 |
| 5b | 2,13 |

### Beispiel 6: Beschichtungen mit dem bormodifizierten Organosol 1c und D4-Silanol

Die Komponenten wurden in der Menge und Reihenfolge, wie in Tabelle 6 angegeben, unter Rühren vermischt und weitere 60 Minuten gerührt. Danach wurden Filme (60 und 90 µm Naßfilmdicke) auf Glas appliziert, die 30 Minuten bei Raumtemperatur und 3 Stunden bei 130°C ausgehärtet wurde. Es wurden transparente, rißfreie Filme erhalten, die eine sehr gute Verschleißbeständigkeit gegenüber Stahlwolle zeigten.

**Tabelle 6**

| | Probe 6 |
|---|---|
| Komponente | Menge [g] |
| D4-Silanol | 0,6 |
| TEOS | 1,6 |
| mod. Organosol 1c | 5,0 |
| Isopropanol | 3,9 |
| 0,1 N p-Toluolsulfonsäure | 0,3 |

### Beispiel 7: Beschichtungen mit dem bormodifizierten Organosol 1 d und D4-Silanol

Die Komponenten wurden in der Menge und Reihenfolge, wie in Tabelle 7 angegeben, unter Rühren vermischt und weitere 60 Minuten gerührt. Danach wurden Filme (60 und 90 µm Naßfilmdicke) auf Glas appliziert, die 30 Minuten bei Raumtemperatur und 3 Stunden bei 130 °C ausgehärtet wurde. Es wurden transparente, rißfreie Filme erhalten.

**Tabelle 7**

| | Probe 7a | Probe 7b |
|---|---|---|
| Komponente | Menge [g] | Menge [g] |
| D4-Silanol | 0,6 | 0,5 |
| TEOS | 1,6 | 1,6 |
| mod. Organosol 1d | 5,0 | 5,0 |
| Isopropanol | 3,9 | 3,9 |
| 0,1 N p-Toluolsulfonsäure | 0,3 | 0,3 |

Die Ergebnisse des Hub-Schub-Tests sind in der nachfolgenden Tabelle aufgeführt.

| Proben-Nr. | Δ Trübung [%] |
|---|---|
| Makrolon ® | 13,40 |
| 7b | 1,44 |

### Beispiel 8: Beschichtungen mit dem bormodifizierten Organosol 1e und D4-Silanol

Die Komponenten wurden in der Menge und Reihenfolge, wie in Tabelle 8 angegeben, unter Rühren vermischt und weitere 60 Minuten gerührt. Danach wurden Filme (60 und 90 µm Naßfilmdicke) auf Glas appliziert, die 30 Minuten bei Raumtemperatur und 3 Stunden bei 130°C ausgehärtet wurde. Es wurden transparente, rißfreie Filme erhalten, die eine sehr gute Verschleißbeständigkeit gegenüber Stahlwolle zeigten.

**Tabelle 8**

| | Probe 8 |
|---|---|
| Komponente | Menge [g] |
| D4-Silanol | 0,5 |
| TEOS | 1,6 |
| mod. Organosol 1c | 5,0 |
| Isopropanol | 3,9 |
| 0,1 N p-Toluolsulfonsäure | 0,3 |

### Beispiel 9: Beschichtungen mit dem bormodifizierten Organosol 1f und D4-Silanol

Die Komponenten wurden in der Menge und Reihenfolge, wie in Tabelle 9 angegeben, unter Rühren vermischt und weitere 60 Minuten gerührt. Danach wurden Filme (60 und 90 µm Naßfilmdicke) auf Glas appliziert, die 30 Minuten bei Raumtemperatur und 3 Stunden bei 130°C ausgehärtet wurde. Es wurden transparente, rißfreie Filme erhalten.

**Tabelle 9**

| | Probe 9 |
|---|---|
| Komponente | Menge [g] |
| D4-Silanol | 0,5 |
| TEOS | 1,6 |
| mod. Organosol 1c | 5,0 |
| Isopropanol | 3,9 |
| 0,1 N p-Toluolsulfonsäure | 0,3 |

### Beispiel 10 Zusatz von organischem Polymer zur Verbesserung der Haftung

Zu 4 ml einer nach Beispiel 7, Probe 7 b, hergestellten Mischung wurden nach dem angegebenen Rühren von 60 Min. 0,6 ml Desmophen® A450, 50 Gew.-% in n-Butylacetat, zugesetzt. Es wurde eine transparente, homogene Mischung erhalten. Nach weiteren 15 Min. Rühren wurde ein Film (60 µm Naßfilmdicke) auf Makrolon® appliziert, der 30 Minuten bei Raumtemperatur und 3 Stunden bei 130°C ausgehärtet wurde.

Ein dann auf die erhaltene Beschichtung aufgebrachter Klebestreifen läßt die Beschichtung nach dessen Abziehen unverändert.

(Desmophen® A 450 ist ein Polyacrylat-basiertes Polymer einer Viskosität von 4 000 mPa·s bei 23°C und einem OH-Gehalt von 1,0 %, hergestellt durch die Bayer AG, Leverkusen.)

### Vergleichsbeispiel 1: Herstellung Si(OMe)₄ - modifizierter Organosole

50 g Organokieselsol und die in der nachfolgenden Tabelle angegebene Art und Menge eines Alkoxids wurden unter Rühren zusammengegeben und weitere 20 Stunden gerührt.

| Proben-Nr. | Alkoxid | Menge [g] |
|---|---|---|
| V1 | Si(OMe)₄ | 1,5 |

### Vergleichsbeispiel 2: Beschichtungen mit reinem Organosol und Si(OMe)₄ - modifiziertem Organosol V1

Die Komponenten wurden in der Menge und Reihenfolge, wie in Tabelle 10 angegeben, unter Rühren vermischt und weitere 60 Minuten gerührt. Danach wurden 2 Filme (120 und 240µm Naßfilmdicke) auf Glas appliziert, die 30 Minuten bei Raumtemperatur und 1 bzw. 4 Stunden bei 130°C ausgehärtet wurden. Es wurden rißfreie, transparente Beschichtungen erhalten.

**Tabelle 10**

| | Probe V2a | Probe V2b |
|---|---|---|
| Komponenten | Menge [g] | Menge [g] |
| D4-Silanol | 2,5 | 2,5 |
| TEOS | 1,6 | 1,6 |
| Organosol | x | 5,0 |
| mod. Organosol V1 | 5,0 | x |
| Isopropanol | 3,9 | 3,9 |
| 0,1 N p-Toluolsulfonsäure | 0,3 | 0,3 |

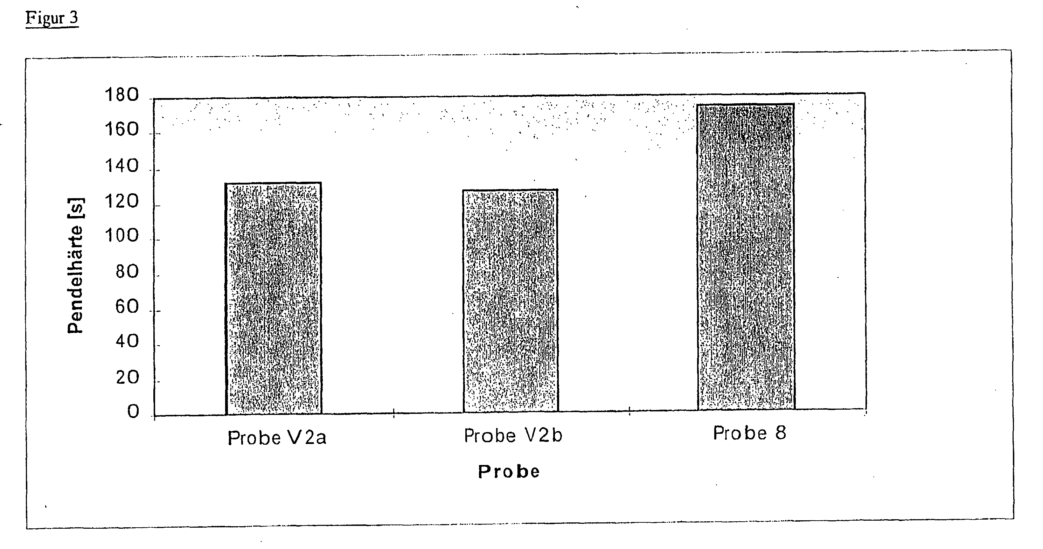

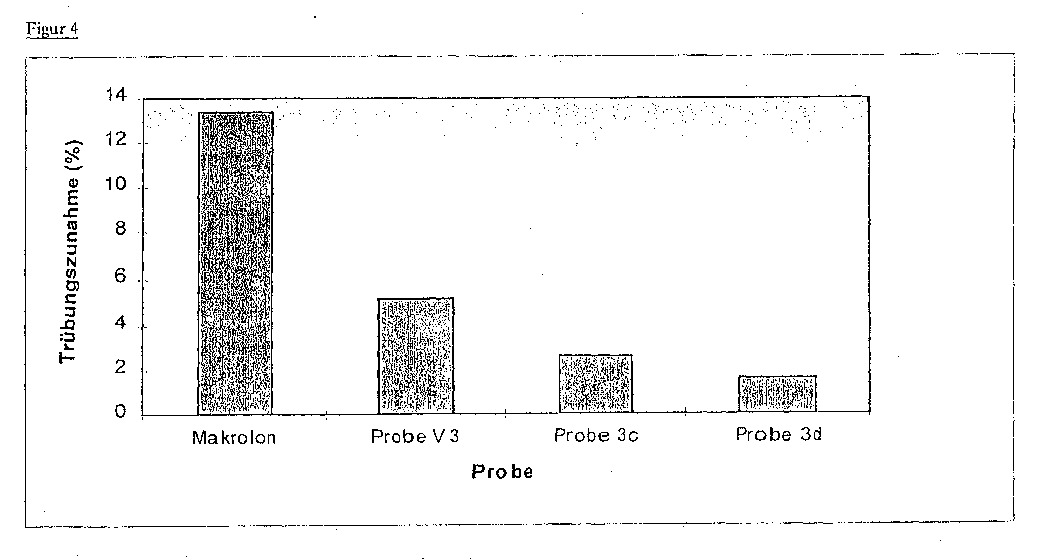

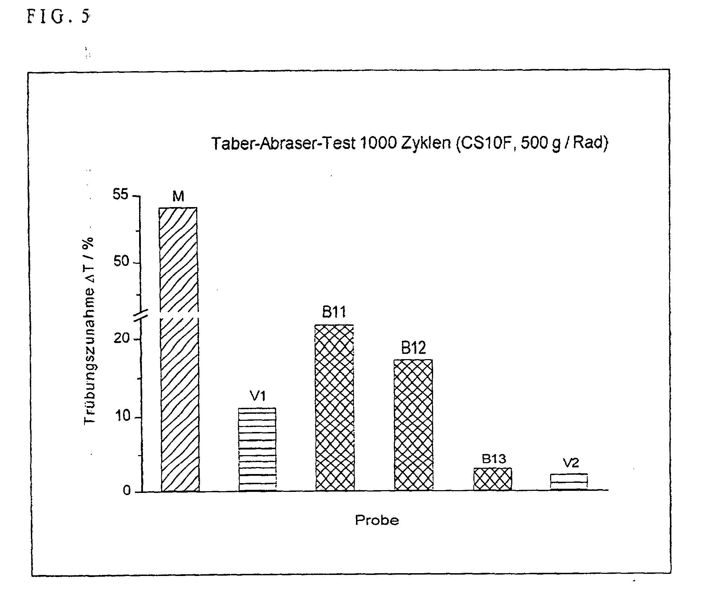

Aus Tabelle 11 wird deutlich, daß die borhaltige Beschichtung eine erheblich höhere Pendelhärte aufweist, als die vergleichbare Beschichtung auf Basis des modifizierten Organosols V1. Dieser Zusammenhang ist in Figur 3 veranschaulicht.

**Tabelle 11**

| | Aushärtung 1h | Aushärtung 4h |
|---|---|---|
| Proben-Nr. | Pendelhärte [s] | Pendelhärte [s] |
| 8 | 158 | 174 |
| V2a | 105 | 132 |
| V2b | nicht bestimmt | 127 |

### Vergleichsbeispiel 3:

Die Komponenten wurden in der Menge und Reihenfolge, wie in Tabelle 12 angegeben, unter Rühren vermischt und weitere 60 Minuten gerührt. Danach wurde ein Film (60 µm Naßfilmdicke) auf Glas appliziert, der 30 Minuten bei Raumtemperatur und 3 Stunden bei 130°C ausgehärtet wurde.

**Tabelle 12**

| | Probe V3 |
|---|---|
| Komponente | Menge [g] |
| D4-Silanol | 0,6 |
| TEOS | 1,6 |
| Organosol | 5,0 |
| Isopropanol | 3,9 |
| 0,1 N p-Toluolsulfonsäure | 0,3 |

Die Ergebnisse des Hub-Schub-Tests sind in der Tabelle 13 aufgeführt. Dort ist als Vergleich ebenfalls der Wert für unbeschichtetes angegeben. Die Ergebnisse des Hub-Tests sind in Figur 4 auch grafisch wiedergegeben. Es wird deutlich, daß selbst durch Zusatz geringer Mengen von Borsäureester, die Verschleißfestigkeit erheblich gesteigert werden kann.

**Tabelle 13**

| Proben-Nr. | Δ Trübung [%] |
|---|---|
| Makrolon® | 13,4 |
| V3 | 5,15 |
| 3c | 2,60 |
| 3d | 1,59 |

### Beispiel 11: Herstellung von und Beschichtung mit aluminiumhaltigen Hybridmaterialien (weiche Einstellung)

10 g TEOS wurden in 4 g 1-Methoxy-2-propanol gelöst und mit 2 g 0,1 N p-Toluolsulfonsäure unter Rühren vermischt und weitere 60 Minuten gerührt (Vorhydrolysat). 3 g Aluminium-sec.-butylat wurden in 2,4 g 1-Methoxy-2-propanol gelöst, mit 1,6 g Acetessigester versetzt und dem Vorhydrolysat zugesetzt und weitere 60 Minuten gerührt. Danach wurden 4,1 g D 4-Silanol gelöst in 7,6 g 1-Methoxy-2-propanol zu der Lösung zugesetzt und eine weitere Stunde gerührt.

Schließlich wurde der Lack auf mit 3-Aminopropyltrimethoxysilan vorbehandelte Polycarbonatplatten (Makrolon®, 100 x 100 mm) durch Schleuderapplikation (2000 U/min, 20 s, 1 Stunde 80°C Aushärtung) aufgebracht und 5 Stunden bei 130°C ausgehärtet.

Die Ergebnisse des Taber Abraser-Tests im Vergleich zu unbeschichtetem Polycarbonat sind in Tabelle 14 zusammengefaßt und graphisch in Figur 5 dargestellt.

In Fig. 5 bedeuten
- M:: unbeschichtetes Polycarbonat (Makrolon®)
- V1:: Vergleichsprobe 1 (beschichtetes Polycarbonat, MR5®, Fa. GE)
- V2:: Vergleichsprobe 2 (unbeschichtetes Glas)
- B11:: Beispiel 11
- B12:: Beispiel 12
- B13:: Beispiel 13

**Tabelle 14**

| Bezeichnung | Δ Trübung [%] |
|---|---|
| Makrolon® | 54,0 |
| Beispiel 11 | 22,0 |

### Beispiel 12: Herstellung von und Beschichtung mit aluminiumhaltigen Hybridmaterialien (mittelharte Einstellung)

10 g TEOS wurden in 7,6 g 1-Methoxy-2-propanol gelöst und mit 2 g 0,1 N p-Toluolsulfonsäure unter Rühren vermischt und weitere 60 Minuten gerührt (Vorhydrolysat). 3 g Aluminium-sec.-butylat wurden in 1,5 g 1-Methoxy-2-propanol gelöst, mit 1,6 g Acetessigester versetzt und dem Vorhydrolysat zugesetzt und weitere 60 Minuten gerührt. Danach wurden 4,1 g D 4-Silanol gelöst in 7,6 g 1-Methoxy-2-propanol zu der Lösung zugesetzt und eine weitere Stunde gerührt.

Schließlich wurde der Lack auf mit 3-Aminopropyltrimethoxysilan vorbehandelte Polycarbonatplatten (Makrolon®, 100 x 100 mm) durch Schleuderapplikation (2000 U/min, 20 s, 1 Stunde 80°C Aushärtung) aufgebracht und 5 Stunden bei 130°C ausgehärtet.

Die Ergebnisse des Taber Abraser-Tests im Vergleich zu unbeschichtetem Polycarbonat sind in Tabelle 15 zusammengefaßt und graphisch in Figur 5 dargestellt (Erläuterung siehe bei Beispiel 11).

**Tabelle 15**

| Bezeichnung | Δ Trübung [%] |
|---|---|
| Makrolon® | 54,0 |
| Beispiel 12 | 17,3 |

### Beispiel 13: Herstellung von und Beschichtung mit aluminiumhaltigen Hybridmaterialien (harte Einstellung)

10 g TEOS wurden in 5,5 g 1-Methoxy-2-propanol gelöst und mit 2 g 0,1 N p-Toluolsulfonsäure unter Rühren vermischt und weitere 60 Minuten gerührt (Vorhydrolysat). 3 g Aluminium-sec.-butylat wurden in 1 g 1-Methoxy-2-propanol gelöst, mit 1,6 g Acetessigester versetzt und dem Vorhydrolysat zugesetzt und weitere 60 Minuten gerührt. Danach wurden 1,7 g D 4-Silanol gelöst in 4,1 g 1-Methoxy-2-propanol zu der Lösung zugesetzt und eine weitere Stunde gerührt.

Schließlich wurde der Lack auf mit 3-Aminopropyltrimethoxysilan vorbehandelte Polycarbonatplatten (Makrolon®, 100 x 100 mm) durch Schleuderapplikation (2000 U/min, 20 s, 1 Stunde 80°C Aushärtung) aufgebracht und 5 Stunden bei 130°C ausgehärtet.

Die Ergebnisse des Taber Abraser-Tests im Vergleich zu unbeschichtetem Polycarbonat sind in Tabelle 16 zusammengefaßt und graphisch in Figur 5 dargestellt (Erläuterung siehe bei Beispiel 11).

**Tabelle 16**

| Bezeichnung | Δ Trübung [%] |
|---|---|
| Makrolon® | 54,0 |
| Beispiel 13 | 2,8 |
| Glas | 2,0 |

### Beispiel 14: Herstellung von und Beschichtung mit aluminiumhaltigen Hybridmaterialien durch Verwendung eines Aluminium/Organosilan-Precursors

Aluminium/Organosilan-Precursors:
6,2 g Aluminium-sec.-butylat wurden in 1,2 g 1-Methoxy-2-propanol gelöst und mit 3,3 g Acetessigester versetzt und auf 60°C erwärmt. Zu dieser Lösung wurden 4,1 g D 4-Silanol in 7,5 g 1-Methoxy-2-propanol unter Rühren zugetropft. Nach erfolgter Zugabe wird eine weitere Stunde bei 60°C gerührt.

14,2 g TEOS wurden in 9 g 1-Methoxy-2-propanol gelöst und mit 2,9 g 0,1 N p-Toluolsulfonsäure unter Rühren vermischt und weitere 60 Minuten gerührt (Vorhydrolysat). Danach wurden Aluminium/Organosilan-Precursors und Vorhydrolysat vereinigt, mit 2,9 g 0,1 N p-Toluolsulfonsäure unter Rühren vermischt und weitere 60 Minuten gerührt. Schließlich wurde der Lack auf mit 3-Aminopropyltrimethoxysilan vorbehandelte Polycarbonatplatten (Makrolon®, 100x100 mm) durch Schleuderapplikation (2000 U/min, 20 s, 1 Stunde 80°C Aushärtung) aufgebracht und 5 Stunden bei 130°C ausgehärtet.

## Patentansprüche

1. Mischungen enthaltend
A) mindestens ein lineares, verzweigtes oder cyclisches monomeres Organosilan, das über mindestens 2 Siliciumatome mit hydrolysierbaren und/oder kondensationsvernetzenden Gruppen verfügt, wobei die Siliciumatome jeweils über mindestens 1 Kohlenstoffatom über eine verknüpfende Einheit miteinander verbunden sind,
B) mindestens eine bor- und/oder aluminiumhaltige Verbindung der Formel
RₓM(OR')₃₋ₓ (I),
wobei
M = Al, B
x = 0, 1 oder 2 ist,
R = C₁-C₆-Alkyl, C₆-C₁₂-Aryl oder (O)_{1/2} ist und
im Falle von R = (O)_{1/2} und
x = 1 die Verbindung der Formel (I) Bestandteil einer Kette ist und im Falle von
x = 2 Bestandteil einer ringförmigen oder käfigförmigen Verbindung ist und
R' = H, C₁-C₁₀-Alkyl und/oder C₆-C₁₂-Aryl ist,
C) Alkoxide der Formel (VIa)
Q(OR")_{z} (IVa)
mit
Q = Ga oder In
z = 3 und
R" = ein gegebenenfalls ein- oder mehrfach substituierter C₁-C₆-Alkyl- oder C₆-C₁₂-Arylrest ist,
oder worin
Q = Si, Ge, Ti, Zr oder Hf und
z = 4 ist
und/oder
(R')_{4-y}Si(OR")_{y} (IVb)
mit
R' ein Alkyl- oder Arylrest ist, der ein- oder mehrfach substituiert sein kann,
y gleich 1, 2 oder 3 ist und
R" = ein gegebenenfalls ein- oder mehrfach substituierter C₁-C₆-Alkyl- oder C₆-C₁₂-Arylrest ist.

2. Mischungen nach Anspruch 1, **dadurch gekennzeichnet, dass** die hydrolysierbaren Gruppen C₁-C₁₀-Alkoxy, C₆-C₁₂-Aryloxy und die kondensationsvernetzenden Gruppen OH-Gruppen sind.

3. Mischungen nach Anspruch 1 oder 2, **dadurch gekennzeichnet, dass** die verknüpfenden Einheiten lineare oder verzweigte C₁-C₂₀-Alkylenketten, C₅-C₁₀-Cycloalkylenreste oder C₆-C₁₂-aromatische Reste, heterocyclische, heteroaromatische oder mit Heteroatomen substituierte lineare Verbindungen und/oder Si, N, P, O sowie S sind.

4. Mischungen nach einem oder mehreren der Ansprüche 1 bis 3, **dadurch gekennzeichnet, dass** die verknüpfenden Einheiten cyclische oder käfigförmige Siloxane oder verzweigte Carbosilane sind.

5. Mischungen nach einem oder mehreren der Ansprüche 1 bis 4, **dadurch gekennzeichnet, dass** das monomere Organosilan die Formel
R¹ ₄₋ᵢSi[(CH₂)ₙSi(OR²)ₐR³ ₃₋ₐ]ᵢ
mit
i = 2 bis 4,
n = 1 bis 10,
R¹ = C₁-C₆-Alkyl, C₆-C₁₄-Aryl,
a = 1 bis 3
R² = C₁-C₆-Alkyl, C₆-C₁₄-Aryl, bevorzugt R² = Methyl, Ethyl, Isopropyl;
R³ = C₁-C₆-Alkyl, C₆-C₁₄-Aryl,bevorzugt R³ = Methyl,
wobei für den Fall a = 1 R² auch Wasserstoff bedeuten kann,
und/oder 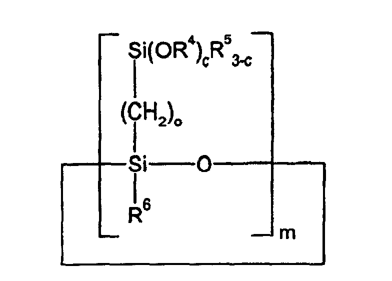 mit
m = 3 bis 6,
o = 2 bis 10,
R⁶ = C₁-C₆-Alkyl, C₆-C₁₄-Aryl,
c = 1 bis 3,
R⁴ = C₁-C₆-Alkyl, C₆-C₁₄-Aryl,bevorzugt R⁴ = Methyl, Ethyl, Isopropyl;
für den Fall c = 1 kann R⁴ auch Wasserstoff bedeuten,
R⁵ = C₁-C₆-Alkyl, C₆-C₁₄-Aryl,
und/oder der allgemeinen Formel
R¹⁰ ₄₋ᵢSi[OSiR⁹ ₂(CH₂)ₚSi(OR⁷)_{d}R⁸ _{3-d}]ᵢ
mit
i = 2 bis 4,
R¹⁰ = C₁-C₆-Alkyl, C₆-C₁₄-Aryl,
p = 1 bis 10,
R⁹ = C₁-C₆-Alkyl, C₆-C₁₄-Aryl,
d = 1 bis 3,
R⁷ = C₁-C₆-Alkyl, C₆-C₁₄-Aryl,
für den Fall d = 1 kann R⁷ auch H sein und
R⁸ = C₁-C₆-Alkyl, C₆-C₁₄-Aryl, ist.

6. Mischungen nach einem oder mehreren der Ansprüche 1 bis 5, **dadurch gekennzeichnet, dass** das monomere Organosilan die Formeln
Si[(CH₂)₂Si(OH)(CH₃)₂]₄
*cyclo-*{OSiMe[(CH₂)₂Si(OH)Me₂]}₄,
*cyclo*-{OSiMe[(CH₂)₂Si(OEt)₂Me]}₄,
*cyclo*-{OSiMe[(CH₂)₂Si(OMe)Me₂]}₄
und/oder
*cyclo*-{OSiMe[(CH₂)₂Si(OEt)₃]}₄,
aufweist.

7. Mischungen nach einem oder mehreren der Ansprüche 1 bis 6, **dadurch gekennzeichnet, dass** diese zusätzlich anorganische Partikel (D) und gegebenenfalls Lösemittel (E) enthalten.

8. Mischungen nach einem oder mehreren der Ansprüche 1 bis 7, **dadurch gekennzeichnet, dass** diese zusätzlich organische Polymere enthalten.

9. Hybridmaterialien, erhältlich durch die Umsetzung von Mischungen nach einem oder mehreren der Ansprüche 1 bis 8 in Gegenwart von Wasser und gegebenenfalls Katalysatoren.

10. Beschichtungen, erhältlich durch Aufbringen von Hybridmaterialien nach Anspruch 9 auf eine Oberfläche und Verdampfen der flüchtigen Verbindungen.

## Claims

1. Mixtures comprising
A) at least one linear, branched or cyclic monomeric organosilane which has at least 2 silicon atoms with hydrolysable and/or condensation-crosslinking groups, the silicon atoms in each case being bonded to one another via at least 1 carbon atom via a linking unit and
B) at least one boron- and/or aluminium-containing compound of the formula
RₓB(OR')₃₋ₓ (I),
wherein
M = Al, B
x = 0, 1 or 2,
R = C₁-C₆-alkyl, C₆-C₁₂-aryl or (O)_{1/2} and
in the case where R = (O)_{1/2} and
x = 1, the compound of the formula (I) is a constituent of a chain,
and in the case where
x = 2, is a constituent of a cyclic or cage-like compound, and
R' = H, C₁-C₁₀-alkyl and/or C₆-C₁₂-aryl.
C) alkoxides of the formula (VIa)
Q(OR")_{z} (IVa)
where
Q = Ga or In
z = 3 and
R" = an optionally mono- or polysubstituted C₁-C₆-alkyl or C₆-C₁₂-aryl radical,
or wherein
Q = Si, Ge, Ti, Zr or Hf and
z= 4
and/or
(R')_{4-y}Si(OR")_{y} (IVb)
where
R' is an alkyl or aryl radical, which can be mono- or polysubstituted,
y is 1, 2 or 3 and
R" = an optionally mono- or polysubstitued C₁-C₆-alkyl or C₆-C₁₂-aryl radical.

2. Mixtures according to claim 1, **characterized in that** the hydrolysable groups are C₁-C₁₀-alkoxy or C₆-C₁₂-aryloxy and the condensation-crosslinking groups are OH groups.

3. Mixtures according to claim 1 or 2, **characterized in that** the linking units are linear or branched C₁-C₂₀-alkylene chains, C₅-C₁₀-cycloalkylene radicals or C₆-C₁₂-aromatic radicals, linear compounds which are heterocyclic, heteroaromatic or substituted by heteroatoms, and/or Si, N, P, O and S.

4. Mixtures according to one or more of claims 1 to 3, **characterized in that** the linking units are cyclic or cage-like siloxanes or branched carbosilanes.

5. Mixtures according to one or more of claims 1 to 4, **characterized in that** the monomeric organosilane has the formula
R¹ ₄₋ᵢSi[(CH₂)ₙSi(OR²)ₐR³ ₃₋ₐ]ᵢ
where
i = 2 to 4,
n = 1 to 10,
R¹ = C₁-C₆-alkyl or C₆-C₁₄-aryl,
a = 1 to 3
R² = C₁-C₆-alkyl or C₆-C₁₄-aryl, preferably R² = methyl, ethyl or isopropyl;
R³ = C₁-C₆-alkyl or C₆-C₁₄-aryl, preferably R³ = methyl,
where, in the case where a = 1, R² can also denote hydrogen,
and/or 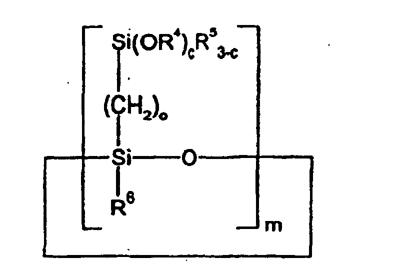 where
m = 3 to 6,
o = 2 to 10,
R⁶ = C₁-C₆-alkyl or C₆-C₁₄-aryl,
c = 1 to 3,
R⁴ = C₁-C₆-alkyl or C₆-C₁₄-aryl, preferably R⁴ = methyl, ethyl or isopropyl,
in the case where c = 1, R⁴ can also denote hydrogen,
R⁵ = C₁-C₆-alkyl or C₆-C₁₄-aryl,
and/or the general formula
R¹⁰ ₄₋ᵢSi[OSiR⁹ ₂(CH₂)ₚSi(OR⁷)_{d}R⁸ _{3-d}]ᵢ ,
where
i= 2 to 4,
R¹⁰ = C₁-C₆-alkyl or C₆-C₁₄-aryl,
p = 1 to 10
R⁹ = C₁-C₆-alkyl or C₆-C₁₄-aryl,
d = 1 to 3,
R⁷ = C₁-C₆-alkyl or C₆-C₁₄-aryl,
in the case where d = 1, R⁷ can also be H and
R⁸ = C₁-C₆-alkyl or C₆-C₁₄-aryl.

6. Mixtures according to one or more of claims 1 to 5, **characterized in that** the monomeric organosilane has the formulae
Si[(CH₂)₂Si(OH)(CH₃)₂]₄,
*cyclo-*{OSiMe[(CH₂)₂Si(OH)Me₂]}₄,
*cyclo-*{OSiMe[(CH₂)₂Si(OEt)₂Me]}₄,
*cyclo*-{OSiMe[(CH₂)₂Si(OMe)Me₂]}₄
and/or
*cyclo*-{OSiMe[(CH₂)₂Si(OEt)₃]}₄.

7. Mixtures according to one or more of claims 1 to 6, **characterized in that** they additionally comprise inorganic particles (D) and, optionally, solvents (E).

8. Mixtures according to one or more of claims 1 to 7, **characterized in that** they additionally comprise organic polymers.

9. Hybrid materials obtainable by reaction of mixtures according to one or more of claims 1 to 8 in the presence of water and, optionally, catalysts.

10. Coatings obtainable by application of hybrid materials according to claim 9 to a surface and evaporation of the volatile compounds.

## Revendications

1. Mélanges contenant
A) au moins un organosilane monomère linéaire, ramifié ou cyclique, qui possède au moins 2 atomes de silicium avec des groupes hydrolysables et/ou réticulant par condensation, les atomes de silicium étant liés entre eux chaque fois par au moins 1 atome de carbone via une unité établissant une liaison,
B) au moins un composé contenant du bore et/ou de l'aluminium de la formule
RₓM(OR')₃₋ₓ (I),
dans laquelle
M= Al, B
x = 0, 1 ou 2,
R = alkyle en C₁-C₆, aryle en C₆-C₁₂ ou (O)_{1/2} et dans le cas où R = (O)_{1/2} et
x = 1, le composé de la formule (I) fait partie d'une chaîne et dans le cas où
x = 2, le composé de la formule (I) fait partie d'un composé cyclique ou en cage et
R' = H, alkyle en C₁-C₁₀ et/ou aryle en C₆-C₁₂,
C) alcoxydes de la formule (VIa)
Q(OR")_{z} (IVa)
avec
Q = Ga ou In
z = 3 et
R" est un radical alkyle en C₁-C₆ ou aryle en C₆-C₁₂, éventuellement mono- ou polysubstitué
ou dans laquelle
Q = Si, Ge, Ti, Zr ou Hf et
z = 4
et/ou
(R')_{4-y}Si(OR")_{y} (IVb)
avec
R' est un radical alkyle ou aryle, qui peut être mono- ou polysubstitué,
y est égal à 1, 2 ou 3 et
R" est un radical alkyle en C₁-C₆ ou aryle en C₆-C₁₂, éventuellement mono- ou polysubstitué.

2. Mélanges selon la revendication 1, **caractérisés en ce que** les groupes hydrolysables sont des groupes alcoxy en C₁-C₁₀, aryloxy en C₆-C₁₂ et les groupes réticulant par condensation sont des groupes OH.

3. Mélanges selon la revendication 1 ou 2, **caractérisés en ce que** les unités établissant une liaison sont des chaînes alkylène en C₁-C₂₀ linéaires ou ramifiées, des radicaux cycloalkylène en C₅-C₁₀ ou des radicaux aromatiques en C₆-C₁₂, des composés linéaires hétérocycliques, hétéroaromatiques ou substitués par des hétéroatomes et/ou Si, N, P, O et S.

4. Mélanges selon une des revendications 1 à 3, **caractérisés en ce que** les unités établissant une liaison sont des siloxanes cycliques ou en cage ou des carbosilanes ramifiés.

5. Mélanges selon une ou plusieurs des revendications 1 à 4, **caractérisés en ce que** l'organosilane monomère correspond à la formule
R¹ ₄₋ᵢSi[(CH₂)ₙSi(OR²)ₐR³ ₃₋ₐ]ᵢ
avec
i = 2 à 4,
n = 1 à 10,
R¹ = alkyle en C₁-C₆, aryle en C₆-C₁₄,
a = 1 à 3,
R² = alkyle en C₁-C₆, aryle en C₆-C₁₄·R² préféré = méthyle, éthyle, isopropyle,
R³ = alkyle en C₁-C₆, aryle en C₆-C₁₄·R³ préféré = méthyle,
au cas où a = 1, R² peut également correspondre à l'hydrogène,
et/ou 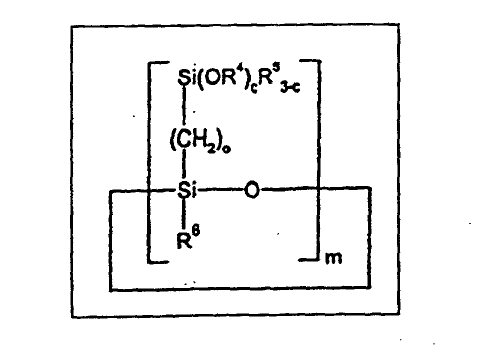 avec
m = 3 à 6,
o = 2 à 10
R⁶ = alkyle en C₁-C₆, aryle en C₆-C₁₄,
c = 1 à 3,
R⁴ = alkyle en C₁-C₆, aryle en C₆-C₁₄, R⁴ préféré = méthyle, éthyle, isopropyle;
au cas où c = 1, R⁴ peut également correspondre à l'hydrogène,
R⁵ = alkyle en C₁-C₆, aryle en C₆-C₁₄,
et/ou à la formule générale
R¹⁰ ₄₋ᵢSi[OSiR⁹ ₂ (CH₂)ₚSi(OR⁷)_{d}R⁸ _{3-d}]ᵢ
avec
i = 2 à 4,
R¹⁰ = alkyle en C₁-C₆, aryle en C₆-C₁₄,
p = 1 à 10,
R⁹ = alkyle en C₁-C₆, aryle en C₆-C₁₄,
d = 1 à 3,
R⁷ = alkyle en C₁-C₆, aryle en C₆-C₁₄,
au cas où d = 1, R⁷ peut également être H et
R⁸ = alkyle en C₁-C₆, aryle en C₆-C₁₄.

6. Mélanges selon une ou plusieurs des revendications 1 à 5, **caractérisés en ce que** l'organosilane monomère correspond aux formules
Si[(CH₂)₂Si(OH)(CH₃)₂]₄
*cyclo*-{OSiMe[(CH₂)₂Si(OH)Me₂]}₄,
*cyclo*-{OSiMe[(CH₂)₂Si(OEt)₂Me]}₄,
*cyclo*-{OSiMe[(CH₂)₂Si(OMe)Me₂]}₄
et/ou
*cyclo*-{OSiMe[(CH₂)₂Si(OEt)₃]}₄.

7. Mélanges selon une ou plusieurs des revendications 1 à 6, **caractérisés en ce qu'**ils contiennent en plus des particules inorganiques (D) et éventuellement des solvants (E).

8. Mélanges selon une plusieurs des revendications 1 à 7, **caractérisés en ce qu'**ils contiennent en plus des polymères organiques.

9. Matériaux hybrides, pouvant être obtenus par mise en réaction des mélanges selon une ou plusieurs des revendications 1 à 8, en présence d'eau et éventuellement de catalyseurs.

10. Revêtements, pouvant être obtenus par application des matériaux hybrides selon la revendication 9 sur une surface et évaporation des composés volatils.
